(19) Europäisches Patentamt
European Patent Office
Office européen des brevets

(11) **EP 3 065 942 B1**

(12) **EUROPEAN PATENT SPECIFICATION**

(45) Date of publication and mention
of the grant of the patent:
**20.02.2019 Bulletin 2019/08**

(51) Int Cl.:
***B29D 30/06*** (2006.01)   ***B29D 30/00*** (2006.01)
***G01M 17/02*** (2006.01)

(21) Application number: **13897251.8**

(22) Date of filing: **08.11.2013**

(86) International application number:
**PCT/US2013/069082**

(87) International publication number:
**WO 2015/069270 (14.05.2015 Gazette 2015/19)**

(54) **IMPROVEMENT OF THE UNIFORMITY OF A TIRE USING ESTIMATION OF TRANSIENT EFFECTS**

VERBESSERUNG DER GLEICHFÖRMIGKEIT EINES REIFENS MIT SCHÄTZUNG VON VORÜBERGEHENDEN EFFEKTEN

AMÉLIORATION DE L'UNIFORMITÉ D'UN PNEUMATIQUE EN UTILISANT UNE ESTIMATION DES EFFETS TRANSITOIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.09.2016 Bulletin 2016/37**

(73) Proprietor: **Compagnie Générale des Etablissements Michelin
63000 Clermont-Ferrand (FR)**

(72) Inventors:
• **MAWBY, William, David
Greenville, South Carolina 29605 (US)**
• **TRAYLOR, James, Michael
Greenville, South Carolina 29605 (US)**
• **APPLEMAN, Casey
Greenville, South Carolina 29605 (US)**

(74) Representative: **Casalonga
Casalonga & Partners
Bayerstraße 71/73
80335 München (DE)**

(56) References cited:
**WO-A1-2013/039505    US-A- 5 036 113
US-A- 5 062 781    US-A1- 2005 081 614
US-A1- 2013 098 148    US-B2- 7 082 816
US-B2- 7 213 451    US-B2- 8 287 675
US-B2- 8 544 319**

EP 3 065 942 B1

**Description**

**FIELD**

The present disclosure relates generally to systems and methods for improving tire uniformity, and more particularly to systems and methods for identifying contributions to tire uniformity from transient uniformity effects that evolve over time to obtain uniformity improvement.

**BACKGROUND**

Tire non-uniformity relates to the symmetry (or lack of symmetry) relative to the tire's axis of rotation in certain quantifiable characteristics of a tire. Conventional tire building methods unfortunately have many opportunities for producing non-uniformities in tires. During rotation of the tires, non-uniformities present in the tire structure produce periodically-varying forces at the wheel axis. Tire non-uniformities are important when these force variations are transmitted as noticeable vibrations to the vehicle and vehicle occupants. These forces are transmitted through the suspension of the vehicle and may be felt in the seats and steering wheel of the vehicle or transmitted as noise in the passenger compartment. The amount of vibration transmitted to the vehicle occupants has been categorized as the "ride comfort" or "comfort" of the tires.

Tire uniformity characteristics, or attributes, are generally categorized as dimensional or geometric variations (radial run out (RRO) and lateral run out (LRO)), mass variance, and rolling force variations (radial force variation, lateral force variation and tangential force variation, sometimes also called longitudinal or fore and aft force variation). Uniformity measurement machines often measure the above and other uniformity characteristics by measuring force at a number of points around a tire as the tire is rotated about its axis.

Many different factors can contribute to the presence of uniformity characteristics in tires. Uniformity dispersions in tires can result from both tire harmonic uniformity effects and process harmonic uniformity effects. Tire harmonic uniformity effects have periods of variation that coincide with the tire circumference (e.g. fit an integer number of times within the tire circumference). Tire harmonic uniformity effects can be attributable to tread joint width, out-of-roundness of the building drums, curing press effects, and other effects. Process harmonic uniformity effects have periods of variation that do not coincide with the tire circumference. Process harmonic effects are generally related to process elements rather than tire circumference. Typical process harmonic effects can be caused, for instance, in the preparation of a semi-finished product (e.g. a tread band), by thickness variations due to the extruder control system or by rollers that can deform the shape of softer products. The impact of the process harmonic effect can change from tire to tire depending on the rate of introduction of the process harmonic effect relative to the tire circumference.

Certain factors can contribute to transient uniformity effects that evolve over time. Because transient effects can have characteristics, (e.g., frequency of introduction, amplitude, and phase angle of maximum amplitude, etc.), that evolve over time, transient effects can be different from a process harmonic effect for which only the impact of the process harmonic changes from tire to tire. For instance, a curing membrane used during a curing process can contribute to tire harmonic uniformity effects on the uniformity of a tire, similar to a building drum. However, the actual effect of the curing membrane can be expected to change throughout its curing history. This change can be attributable to, for instance, a membrane joint that changes with each cure. Similar dynamic effects can be imparted through flexible and inflatable tooling elements, such as tire building drums and rollers.

It can be difficult to physically measure the time changing effects contributing to tire uniformity during a tire manufacturing process. Moreover, transient effects can share some characteristics with fixed tooling elements and some characteristics with process harmonics. As a result, current techniques for identifying and analyzing tire harmonics and/or process harmonics may not adequately identify or address transient effects.

WO 2013/039505-A discloses a system for improving the uniformity of a tire in accordance with the preamble of claim 15. Reference is also made to US 2013/0098148-A, US 2005/0081614-A, US 8544319-B, US 5062781-A, and US 5036113-A. Thus, a need exists for a system and method that can be used to improve the uniformity of a tire using estimation of transient uniformity effects, such as transient tire harmonic uniformity effects caused, for instance, by a curing membrane.

**SUMMARY**

Aspects and advantages of the invention will be set forth in part in the following description, or may be apparent from the description, or may be learned through practice of the invention.

One aspect of the present disclosure is directed to a method for improving the uniformity of a tire in accordance with claim 1. The method includes obtaining uniformity measurements of a uniformity parameter for each tire in a set of a plurality of tires and analyzing, with one or more processing devices, the uniformity measurements to identify a transient uniformity effect. The transient uniformity effect changes over time from tire to tire in the set of tires. The method further includes modifying manufacture of one or more tires based at least in part on the transient uniformity effect. For instance, the method can include modifying a process element (e.g. manufacture of the process element) used during tire manufacture contributing to the transient uniformity effect. In an example implementation, the transient uniformity effect can be attributable to a tire harmonic uniformity effect. For instance, the transient uniformity effect can include a membrane effect attributable to a curing membrane.

Another aspect of the present disclosure is directed to a system for improving the uniformity of a tire in accordance with claim 15. The system includes a measurement machine configured to obtain uniformity measurements for each tire in a set of a plurality of tires. The system further includes a computing system coupled to the measurement machine. The computing system includes one or more processors and at least one non-transitory computer-readable medium. The at least one non-transitory computer-readable medium stores computer-readable instructions that when executed by the one or more processors cause the one or more processors to perform operations. The operations include analyzing the uniformity measurements to identify a transient uniformity effect. The transient uniformity effect changes over time from tire to tire in the set of tires.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 depicts an overview of an example tire manufacturing process.
FIG. 2 depicts a flow diagram of an example method for improving the uniformity of a tire according to an embodiment of the present disclosure.
FIG. 3 depicts a flow diagram of an example method for determining a membrane effect according to an embodiment of the present disclosure.
FIG. 4 depicts an example confection operator tooling signature to be removed from uniformity measurements according to an embodiment of the present disclosure. FIG. 4 plots azimuth about the tire along the abscissa and magnitude of the uniformity parameter along the ordinate.
FIG. 5 depicts example residual waveforms for six consecutively cure tires according to an embodiment of the present disclosure. FIG. 5 plots azimuth about the tire along the abscissa and magnitude of the uniformity parameter along the ordinate.
FIG. 6 depicts a graphical representation of membrane joint estimation for six consecutively cured tires according to an embodiment of the present disclosure. FIG. 6 plots location on the curing membrane along the abscissa and height of the membrane joint along the ordinate.
FIG. 7 depicts a graphical representation of membrane joint estimation for six consecutively cured tires according to an embodiment of the present disclosure. FIG. 7 plots location on the curing membrane along the abscissa and height of the membrane joint along the ordinate.
FIG. 8 depicts a graphical representation of monitoring a membrane effect to determine when to replace a curing membrane according to an example embodiment of the present disclosure. FIG. 8 plots the particular tire along the abscissa and the magnitude of the membrane effect along the ordinate.
FIG. 9 depicts a vector representation of an example tire optimization process according to an example embodiment of the present disclosure.
FIG. 10 depicts an example system for improving the uniformity of a tire according to an embodiment of the present disclosure.

## DETAILED DESCRIPTION

It is to be understood by one of ordinary skill in the art that the present discussion is a description of exemplary embodiments only, and is not intended as limiting the broader aspects of the present invention. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Overview

Generally, example aspects of the present disclosure are directed to improving tire uniformity through identification of transient effects contributing to the non-uniformity of a tire. Certain uniformity effects can be transient effects that evolve over time, such as an effect attributable to a curing membrane of a tire. Such transient effects can be difficult to analyze using techniques for identifying tire harmonic uniformity effects and process harmonic uniformity effects. Example aspects of the present disclosure solve the problem of identifying transient uniformity effects that evolve over time by analyzing readily available uniformity measurements of a tire. The identified transient uniformity effects can be used to improve the uniformity of a tire in various ways. For instance, the identified transient effects can be used to provide an indirect assessment of tooling elements contributing to the transient effect, which could be difficult to measure during a tire manufacturing process.

More particularly, uniformity measurements of a uniformity parameter for a set of tires can be obtained. The uniformity parameter can be radial run out, radial force variation, lateral run out, lateral force variation, static balance, tangential force variation or other suitable uniformity parameter. After optionally removing nuisance effects from the waveform, the transient effect can be identified by analyzing the uniformity measurements for an effect that varies from tire to tire. In one example, the uniformity measurements can be modeled as a sum of a non-transient effect term and a transient effect term. The transient effect term can be specified such that it can vary from tire to tire. Coefficients associated with the transient effect term can be identified using, for instance, a regression or programming analysis. The coefficients associated with the transient effect term can be used to assess one or more characteristics of the transient uniformity effect, such as the rate of change of the transient effect term from tire to tire.

One example transient effect that can be identified according to example aspects of the present disclosure is a membrane effect attributable to a curing membrane used to cure the set of tires. Aspects of the present disclosure will be discussed with reference to identification of a transient membrane effect for purposes of illustration and discussion. Those of ordinary skill in the art, using the disclosures provided herein, will understand that other suitable transient effects can be identified from the uniformity measurements without deviating from the scope of the present disclosure.

During tire manufacture, a curing membrane can be inflated to engage a tire as the tire is cured in a curing press. The curing membrane can include a membrane joint. As the curing membrane is inflated and re-inflated during sequential curing processes, the shape of the curing membrane joint can be altered. The altering of this curing membrane joint can lead to a transient uniformity effect on the tire. The membrane effect can have a period corresponding to the tire circumference and is thus a transient tire harmonic uniformity effect. A transient membrane effect caused by a curing membrane can be identified by analyzing uniformity waveforms measured for a set of tires, such as uniformity waveforms measured for the set of tires or based on uniformity summary data (e.g. magnitude and phase angle of one or more harmonic components of the uniformity effect) for the set of tires.

Tire manufacture can be modified based at least in part on the identified transient uniformity effect. For instance, the membrane effect can be used to determine when to replace a curing membrane during tire manufacture since it can provide a tire-by-tire estimation of the membrane radial run out. This is an advantage over attempting to measure the radial run out of the curing membrane during press operation, which can be difficult, expensive, and disruptive.

As another example, joint audits can be conducted on curing membrane joints using analysis of tire uniformity measurements in order to provide feedback correction of the membrane construction process. In addition, characteristics of a membrane joint in a curing membrane can be designed in a reverse engineering process using the observed transient effects of the curing membrane with the aim to reduce a membrane effect on the uniformity of a tire. The membrane effect can also be considered as a source of non-uniformity that can be used in a tire uniformity optimization process, for instance, by changing a loading angle of a green tire relative to the curing membrane in the press to best match its effect with effects from other components in the process.

Example Tire Manufacturing Process

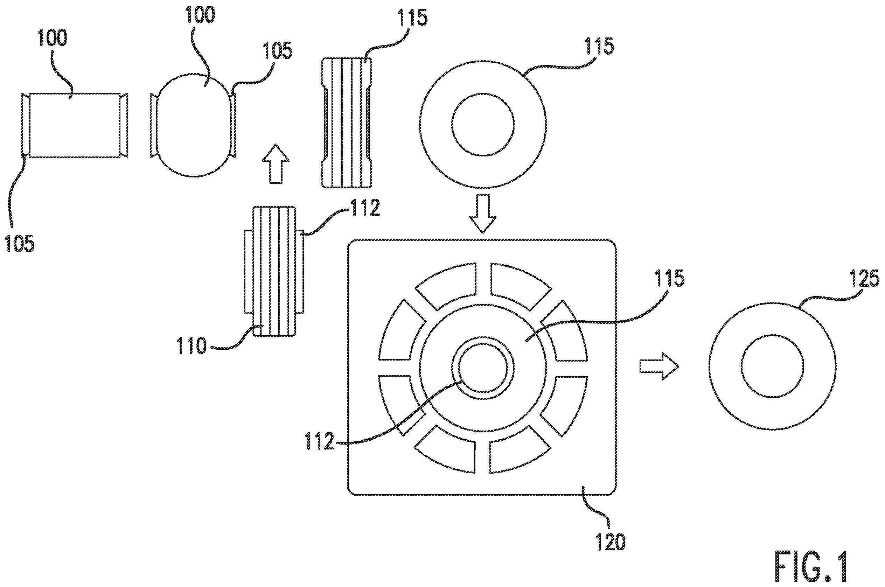

FIG. 1 depicts a simplified depiction of an example tire manufacturing process. A tire carcass 100 is formed on a building drum element 105. In a unistage manufacturing process, the carcass 100 remains on the drum element 105. In a two-stage process, the carcass 100 can be removed from the drum element 105 and moved to a second stage finishing drum element. In either case, the carcass is inflated to receive a finished tread band 110 to produce a finished green tire 115. The tread band 110 can be built on a form tooling element 112 before the tread band 110 is combined with the carcass to produce the finished green tire 115.

The green tire 115 can then be loaded into a curing press 120 and cured to produce a cured tire 125. The curing press 120 can include press elements and a curing membrane 122. During cure of a tire, the curing membrane 122 can be inflated to engage the green tire 115 and press the green tire 115 against the press elements. Heat can be applied to the green tire 115 from the press elements and from the curing membrane 122 to produce the cured tire 125.

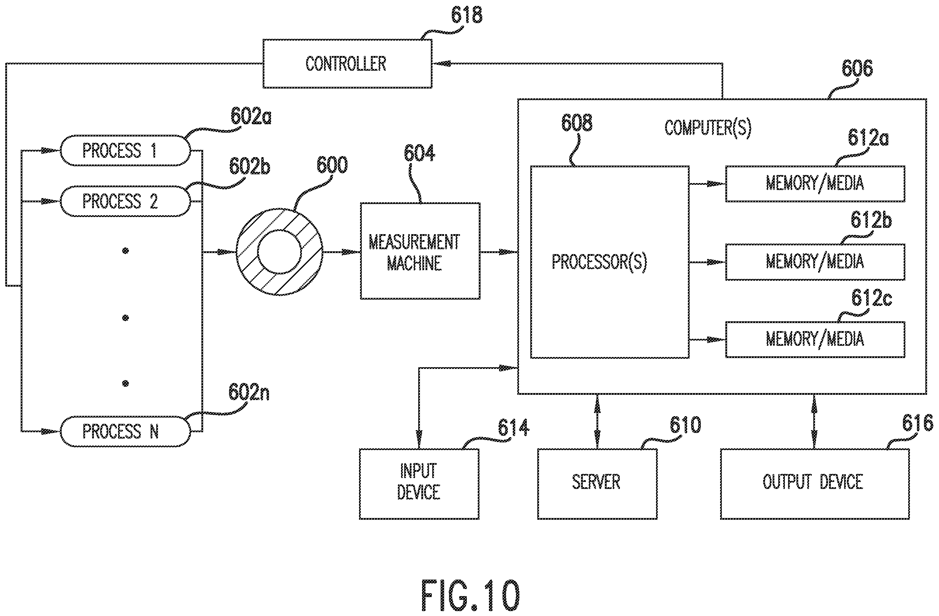

Uniformity measurements of various uniformity parameters can be performed on the tire using uniformity measurement machines at various stages during the tire manufacturing process. For instance, the radial run out of the green tire 115 can be measured before loading the green tire 115 into the curing mold 120. The radial force variation of the cured tire 125 can be measured after the cured tire has been cured in the curing mold 120. An example system for performing uniformity measurements and analyzing uniformity parameters will be discussed in more detail with reference to FIG. 10.

Each of the above tooling elements can have an effect on the uniformity of a tire. For instance, out-of-roundness of the building drum element 105, the form tooling element 110, and/or the curing press 120 can affect the uniformity of a tire. The curing membrane 122 can also affect the uniformity of the tire. For instance, out-of-roundness of the curing membrane 122 due to, for instance, a membrane joint can affect the uniformity of a tire. Because the shape of the membrane joint can change with each cure, the uniformity effect caused by the curing membrane 122 can change from tire to tire and thus evolves over time.

Example Method for Improving the Uniformity of a Tire

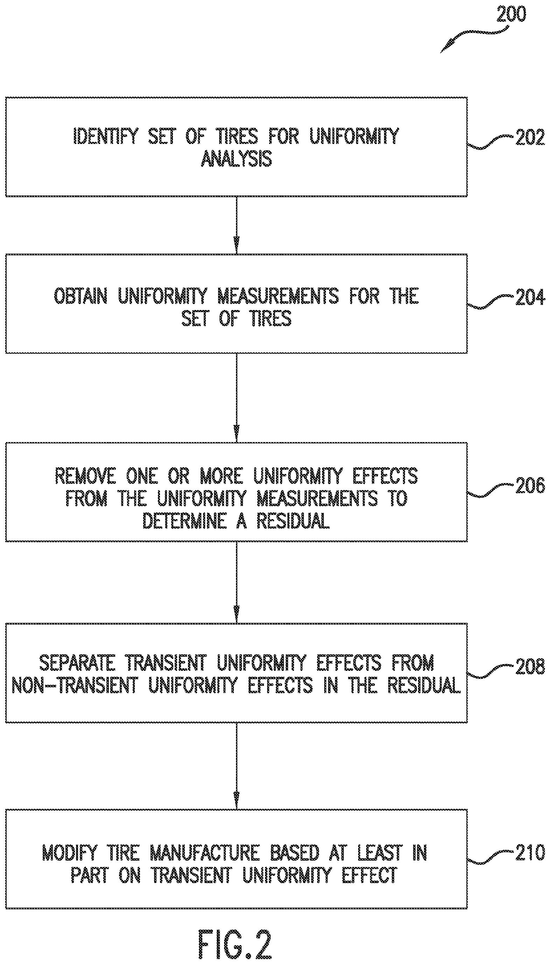

FIG. 2 depicts a flow diagram of an example method (200) for improving the uniformity of a tire though identification of transient uniformity effects according to an embodiment of the present disclosure. FIG. 2 can be implemented at least in part using a suitable uniformity improvement system, such as the system 600 depicted in FIG. 10. FIG. 2 depicts steps performed in a particular order for purposes of illustrations and discussion. Those of ordinary skill in the art, using the disclosures provided herein, will understand that various steps of any of the methods disclosed herein can be omitted, expanded, adapted, rearranged, and/or modified in various ways without deviating from the scope of the present disclosure.

At (202), the method includes identifying a set of a plurality of tires for uniformity analysis. The set of tires can include tires that are subjected to the same transient uniformity effect. For instance, in the example of identifying a transient uniformity effect attributable to a curing membrane, the set of tires can include tires that are consecutively cured using the same curing membrane. Any number of tires can be selected for use in the set of tires. For instance, 5 to 10 tires consecutively cured using the same curing membrane can be identified for analysis.

At (204), uniformity measurements are obtained for the set of tires. As used herein, "obtaining uniformity measurements" can include actually performing the uniformity measurements or accessing the uniformity measurements stored in, for instance, a memory of a computing device. The uniformity measurements can be of any suitable uniformity parameter. For instance, the uniformity measurements can correspond, for example, to such uniformity parameters as radial run out (RRO), lateral run out (LRO), mass variance, balance, radial force variation (RFV), lateral force variation (LFV), tangential force variation (TFV), and other parameters.

In one implementation, the uniformity measurements can include uniformity waveforms for the set of tires. Alternatively, the uniformity measurements can include uniformity summary data. The uniformity summary data can include the magnitude and/or phase angle of one or more harmonics of a uniformity parameter of interest. For instance, the uniformity summary data can include the magnitude of the first four harmonics of radial force variation for each tire in the set of tires.

The uniformity measurements can include contributions from many different effects. For instance, the uniformity measurements can include contributions from tire harmonic uniformity effects (e.g. tooling effects) as well as process harmonic uniformity effects. To identify contributions from these various effects, the uniformity measurements for a tire can be modeled as a sum of tire harmonic terms, process harmonic terms, and a residual.

An example model is provided below:

$$\mathrm{w}_i = \sum_{t=1}^{T} \sum_{h=1}^{\frac{N}{2}} a_{th} \cos\left(\frac{2\pi i h}{N}\right) + b_{th} \sin\left(\frac{2\pi i h}{N}\right) + \sum_{p=1}^{P} a_{\mathrm{p}} \cos\left(\frac{2\pi i h_p}{N}\right) + b_{\mathrm{p}} \sin\left(\frac{2\pi i h_p}{N}\right) + \varepsilon_i$$

$w_i$ is the measured uniformity data for each data point $i$ of N data points about the tire. The mathematical model models tire harmonic uniformity effects $t=1$ to $T$. $h$ is the particular harmonic of the tire harmonic uniformity effect. The mathematical model also models process harmonics $p=1$ to $P$. $h_p$ is the harmonic number of the particular process harmonic uniformity effect. The harmonic number provides a measure of the rate of introduction of the process harmonic uniformity effect relative to the tire circumference. $a_{th}$ and $b_{th}$ are coefficients associated with the tire harmonic terms. $a_p$ and $b_p$ are coefficients associated with the process harmonic terms. $\varepsilon_i$ is a residual term.

Various tire harmonic uniformity effects and process harmonic uniformity effects can be determined from the model by estimating the coefficients associated with the tire harmonic terms and process harmonic terms. The coefficients can be estimated, for instance, using a regression analysis or a programming analysis. Under a regression approach, coefficients are estimated to best fit the mathematical model to the data points in the uniformity measurements. Under a programming approach, the coefficients are estimated to minimize the difference or error between the uniformity measurement and an estimated measurement using a model.

The coefficients associated with the tire harmonic terms and the process harmonic terms are generally constant and do not change from tire to tire. This is true for many tire harmonic uniformity effects and process harmonic uniformity effects. Tooling elements such as building drums and transfer rings are typically relatively rigid and thus tend to impart the same uniformity effects in continued usage. A process harmonic may have its impact change from tire to tire depending on the rate of introduction of the process harmonic relative to the tire circumference. However, the overall effect of the process harmonic remains relatively constant for the set of tires.

Unlike process harmonic and tire harmonic uniformity effects, transient uniformity effects evolve over time. Transient effects can be identified from uniformity measurements by expanding the model to include a term modeling the varying transient effects from tire to tire. An example mathematical model that includes transient effect terms used to model transient effect contributions to uniformity measurements is provided below:

$$w_i^k = \sum_{t=1}^{T} \sum_{h=1}^{\frac{N}{2}} a_{th} \cos\left(\frac{2\pi ih}{N}\right) + b_{th} \sin\left(\frac{2\pi ih}{N}\right) + \sum_{p=1}^{P} a_{\mathrm{p}} \cos(\frac{2\pi ih_p}{N}) + b_{\mathrm{p}} \sin(\frac{2\pi ih_p}{N})$$

$$+ \sum_{h=1}^{N/2} a_h^k \cos(\frac{2\pi ih}{N}) + b_h^k \sin(\frac{2\pi ih}{N}) + \varepsilon_i^k$$

$w_i^k$ is the measured uniformity data for each tire $k$ for each data point $i$ of N data points about the tire. The mathematical model models tire harmonic uniformity effects $t=1$ to $T$. $h$ is the particular harmonic of the tire harmonic uniformity effect. The mathematical model models process harmonics $p=1$ to $P$. $h_p$ is the harmonic number of the particular process harmonic uniformity effect. $a_{th}$ and $b_{th}$ are coefficients associated with the tire harmonic uniformity effects. $a_p$ and $b_p$ are coefficients associated with the process harmonic uniformity effects. The model includes a transient effect term in addition to the tire harmonic uniformity effect and process harmonic uniformity effect terms. The transient effect term varies from tire to tire. $a_h^k$ and $b_h^k$ are coefficients associated with the transient effect term. $k$ represents in index for the sequence of tires in the set (not an exponent), $\varepsilon_i^k$ is a residual term.

A transient uniformity effect can be identified from uniformity measurements based at least in part on aspects of these models. More particularly at (206) of FIG. 2, the method can optionally include removing one or more uniformity effects from the uniformity measurements to identify residual uniformity measurements. The uniformity effects that are removed can be nuisance effects, such as process harmonic uniformity effects and non-transient tire uniformity effects attributable to certain tooling elements. In a particular implementation, the nuisance effects can be identified using a tooling signature analysis, such as the tooling signature analysis techniques disclosed in WO 2014/051613 A1.

An example tooling signature analysis can model the uniformity measurements as a sum of tooling element terms and non-tooling element terms. The tooling element terms can be associated with effects resulting from tooling elements used during tire manufacture. The non-tooling element terms can be associated with all other harmonics (whether tire harmonics or process harmonics) that can contribute to the uniformity of the tire. Coefficients associated with the tooling element terms can be estimated using a regression analysis or a programming analysis. The tooling signature can then be generated based on the estimated coefficients associated with the tooling element terms using, for instance, an analysis of variance analysis (ANOVA analysis).

The ANOVA analysis technique can be performed in which waveform points for the tooling signature are fitted by a set of N offsets with N being the number of data points for the tooling signature, such as 256 data points. To perform this ANOVA analysis technique, there must be multiple measured uniformity waveforms for tires manufactured using the same tooling element. An example mathematical statement of the ANOVA method for a tooling element is provided below:

$$w_{ji} = \alpha + \sum_{q=1}^{Q_c} \sum_{i=1}^{N} \beta_{qi} + \varepsilon_{ji}$$

The $w_{ji}$ is the *ith* waveform point for the *jth* tire. $\alpha$ is a constant term or intercept. $\beta_{qi}$ is a fitted constant for each point of the tooling signature (1 to N) and each tooling element $q$. The $\beta_{qi}$ terms are determined based on the estimated coefficients determined during the regression or programming analysis. The ANOVA analysis can determine the $\beta_{qi}$ terms using a least squared analysis. In particular, a set of $\beta_{qi}$ terms can be selected to minimize the sum of squared errors across all waveform points. There are in general N such $\beta$ terms for each of the tooling elements that are fitted. In particular, this formulation allows for N (e.g. 256) possible unique coefficients (one for each of the tooling signature data points) for each of the tooling elements. These N unique coefficients provide the data points for the comprehensive tooling signature for a tooling element.

Once the tooling signatures for the various tooling elements are identified, the tooling signatures can be removed from the uniformity measurements to identify the residual uniformity measurements. The residual uniformity measurements can then be analyzed to separate transient uniformity effects from non-transient uniformity effects as shown at (208) of FIG. 2. In particular, the residual uniformity measurements can be analyzed to identify an effect that varies from tire to tire in the set of tires. In one implementation, the residual can be modeled as a sum of a non-transient term and a transient term. The transient term can vary from tire to tire in the model. Coefficients associated with the non-transient term and the transient term can be estimated, for instance, using a regression analysis or a programming analysis. The estimated coefficients can be determined based on an expected change (e.g. linear or other relations) of the transient term from tire to tire. One or more parameters (e.g. rate of change of the transient uniformity effect) transient uniformity effect can be identified based at least in part on the estimated coefficients associated with the transient term.

At (210), tire manufacture can be modified based at least in part on the identified transient uniformity effect. The dynamic effects can provide an indirect tire-by-tire assessment of the either the membrane radial run out or the membrane radial force which could be a very difficult or even impossible to measure directly during the curing process. This effect is also done with no disruption to the process that might make the estimates of the curing membrane effects to become biased. The transient effect can be used to determine when to repair or replace certain transient tools (e.g. a curing membrane, flexible building drum with inflatable element, etc.) used during tire manufacture to reduce the uniformity effects attributable to the tool. Because the transient effect often changes in a smooth and predictable pattern it can also be a useful piece of a tire uniformity optimization process. Examples of modifying tire manufacture to improve tire uniformity based at least in part on an identified dynamic uniformity effect are discussed in more detail below.

Example Analysis of Uniformity Measurements to Identify a Membrane Effect

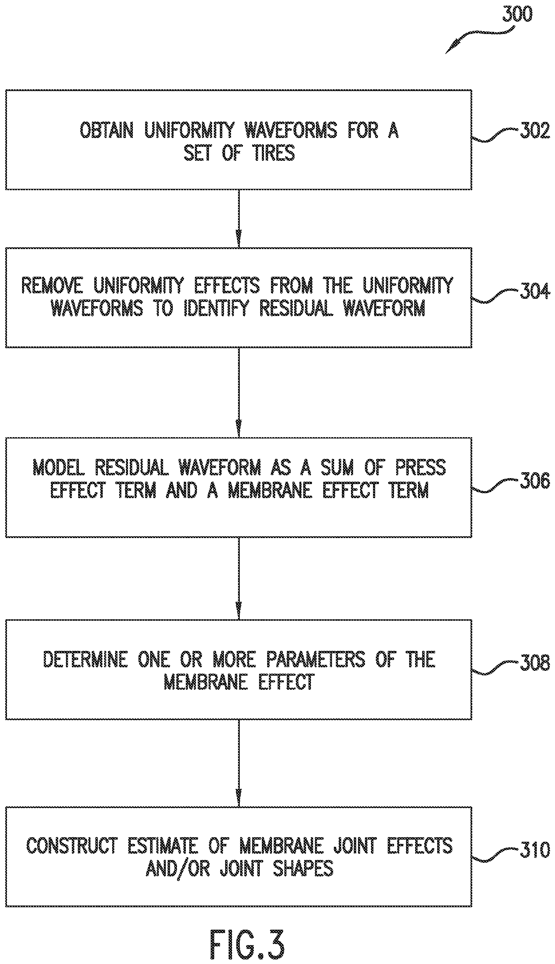

Referring now to FIG. 3, an example method (300) for identifying a transient uniformity effect attributable to a curing membrane will now be set forth. At (302), the method includes obtaining uniformity waveforms for the set of tires. The set of tires can include a plurality of tires that have been consecutively cured using the same curing membrane. The uniformity waveforms can be obtained by measuring the uniformity waveforms using a uniformity measurement machine or by accessing previously measured uniformity waveforms stored, for instance, in a memory.

The uniformity waveforms can include a measured uniformity parameter for a plurality of data points about the azimuth of a tire. For instance, a waveform can be constructed from a number of data points measured in equally spaced points during one rotation of a tire according to a sampling resolution (e.g., 128, 256, 512 or other number of data points per tire revolution). It should be appreciated that the uniformity waveforms can be obtained under a variety of conditions. The uniformity waveforms can be obtained for rotation of the tire in either direction (direct and/or indirect). In addition, the uniformity waveforms can be obtained under loaded or unloaded conditions.

At (304), one or more uniformity effects are optionally removed from the uniformity waveforms to obtain residual waveforms. More particularly, the uniformity waveforms can be cleaned of uniformity effects other than effects attributable to the curing membrane, such as process harmonic uniformity effects and tooling element effects attributable to other tooling elements used during tire manufacture. For example, tooling signatures can be identified for various tooling elements using a tooling signature analysis. This pre-treatment of the data to remove non-dynamic effects is optional but it can be beneficial in reducing dispersion that may affect the final estimates.

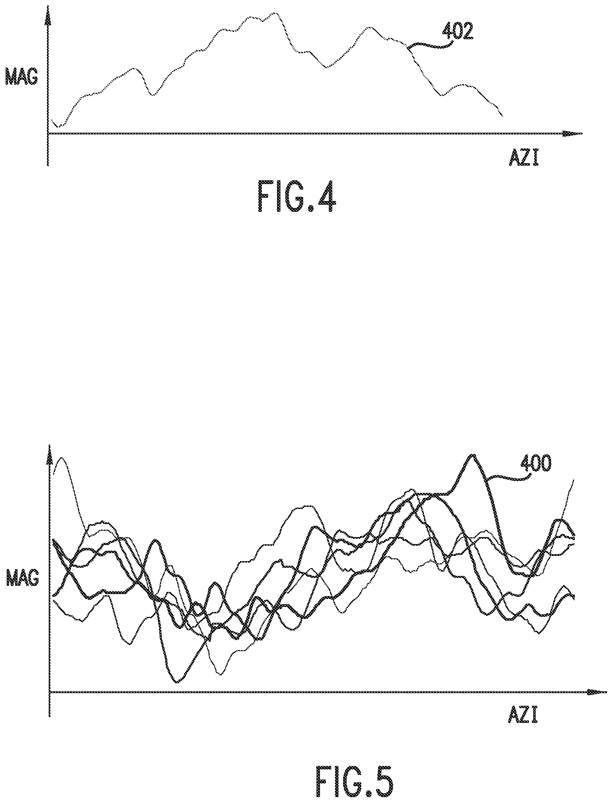

FIG. 4 depicts an example tooling signature 402 that can be obtained for a tooling element, such as a confection operator element. FIG. 4 plots the tooling signature 402 with azimuth about the tooling element along the abscissa and contribution to the uniformity parameter along the ordinate. The tooling signature 402 can be representative of one or more tooling elements used during tire manufacture.

The identified tooling signatures and other uniformity effects (e.g. identified process harmonic uniformity effects) can be removed from the uniformity waveforms to identify residual waveforms associated with the curing membrane.

FIG. 5 plots six residual uniformity waveforms 404 obtained for a set of six tires. FIG. 5 plots azimuth about the tire along the abscissa and magnitude of the uniformity parameter along the ordinate.

The residual waveforms can include contributions from non-transient effects as well as transient effects. For instance, the residual waveforms can include contributions from a press effect that remains fixed through consecutive cures and a membrane effect that is transient through consecutive cures. If the press effect is known, for instance from a tooling signature analysis, the press effect can be removed from the residual waveforms to identify the transient membrane effect for each tire. The transient effect for each tire can then be analyzed to asses one or more parameters of the transient effect, such as a rate of change of the transient effect.

If the press effect is not known, each residual waveform can be modeled as a sum of a press effect term and a membrane effect term as shown at (306) of FIG. 3. For instance, the residual waveforms can be modeled as follows:

$$r_i = p\,\cos(\frac{2\pi i}{N}) + q\,\sin(\frac{2\pi i}{N}) + g * t * \cos\left(\frac{2\pi i}{N}\right) + h * t * \sin(\frac{2\pi i}{N})$$

$r_i$ can be the uniformity parameter for a data point $i$ of $N$ data points of the residual waveform. $p$ and $q$ can represent coefficients associated with the press effect. The membrane effect can be captured by the coefficients g and $h$. Notice the dependence of the membrane effect on $t$ which represents the tire order of cure of the curing membrane, $g$ and $h$ can be more complicated functions of t without deviating from the scope of the present disclosure.

At (308), one or more parameters of the membrane effect can be determined using the model. For instance, the rate of change of the membrane effect for the set of tires can be identified using a regression or a programming analysis. Since the precise value of $t$ may not be known for a particular waveform, one can focus on the differences in the residual waveforms. This can subtract out the press effect (since it is fixed for all tires) and isolate the slope of the membrane change. This can be represented as follows:

$$d_t = g * s + h * s$$

where $d_t$ represents the point-by-point differences between consecutively cured tires s represents the interval of time between $t$+1 and $t$. The g and h coefficients represent the membrane effects as a function of the duration between time values (between cures).

In one particular implementation of the present disclosure, magnitudes of various harmonics of the individual residual waveforms can be identified, for instance, using a Fourier analysis. In particular, a set of harmonic magnitudes for harmonics 1-10 can be identified for each residual waveform. A model can be constructed in which the harmonic magnitude for each harmonic is modeled as a sum of a press effect term and a membrane effect term. One example model is provided below:

$$h_k = c_k + d_k * t$$

where $h_k$ is the harmonic magnitude for each harmonic $k$, $c_k$ is the coefficient associated with the press effect magnitude for each harmonic $k$, and $d_k$ is the coefficient associated with the membrane effect magnitude for each harmonic $k$.

Regression or programming techniques can be used to identify coefficients for the model. Similar to the case of the full waveform, the absolute value of the coefficient $d_k$ cannot be obtained because the exact value of $t$ is not known. Instead, differences can be taken in the harmonic magnitudes to estimate the change in magnitude of the membrane effect with continued use. The change in magnitude can be assumed to be linear or a more complicated model can be used.

Because the membrane effect can be produced by a membrane joint in the curing membrane, it can be useful to analyze the one or more parameters associated with the membrane effect to assess parameters of the membrane joint. For instance, at (310) the method can include constructing an estimate of membrane joint effects and/or joint shapes. For instance, the rates of change of the membrane effect contribution to the harmonic magnitude for a plurality of harmonics (e.g. the first 10 harmonics) can be identified as discussed above. These values can estimate the change in membrane effect through repeated cures. The rates of change may not be equal across the harmonics. This can imply that the joint shape is changing as well as its overall thickness.

According to particular aspects of the present disclosure, it is possible to estimate the joint shape changes by combining the results of all harmonics. For example one might estimate a change $y_h$ for harmonic h. The overall change can be the sum of these terms as follows:

$$\sum_{h=1}^{p} y_h \cos\left(\frac{2\pi ih}{N}\right)$$

where $y_h$ is the estimated associated with each harmonic $h$ of $p$ harmonics and $i$ is each data point of N is the number of data points about the tire. The sum of these terms will be a waveform over the length of the tire but will tend to be show most movement near the membrane joint since only cosine curves are used.

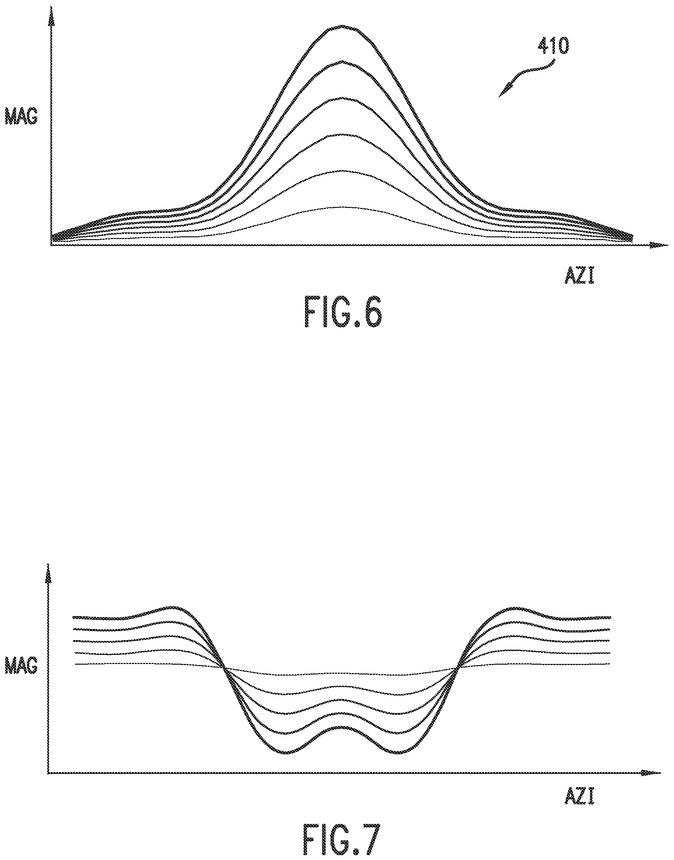

FIG. 6 depicts a graphical representation 410 of the estimated joint shape changes of a curing membrane determined from a set of tires. FIG. 6 plots location on the curing membrane along the abscissa and height of the membrane joint along the ordinate. As shown, the membrane joint is estimated to change shape with each cure. This shape change can be useful to infer membrane evolution over time.

The above example is discussed with reference to determining one or more parameters of a membrane effect using full uniformity waveforms measured for the set of tires. One or more parameters of the membrane effect can also be determined using uniformity summary data. The uniformity summary data can provide magnitude of one or more harmonic components of a uniformity parameter. For instance, the uniformity summary data can provide a magnitude of the first four harmonics of the uniformity parameter.

The membrane effect can be identified by analyzing each of the harmonics of the uniformity parameter individually. For instance, one or more uniformity effects can be removed from each harmonic to identify a plurality of residual harmonics associated with the set of tires. The residual harmonics can then be analyzed individually to identify one or more parameters of the membrane effect.

In one implementation, a model can be constructed in which the harmonic magnitude for each harmonic is modeled as a sum of a press effect term and a membrane effect term. One example model is provided below:

$$h_k = c_k + d_k * t$$

where $h_k$ is the harmonic magnitude for each harmonic $k$, $c_k$ is the coefficient associated with the press effect magnitude for each harmonic $k$, and $d_k$ is the coefficient associated with the membrane effect magnitude for each harmonic $k$.

A regression or programming analysis can be used to determine coefficients for the model. The absolute value of the coefficient $d_k$ cannot be obtained because the exact value of $t$ is not known. Instead, differences can be taken in the harmonic magnitudes to estimate the change in magnitude of the membrane effect with continued use. The change in magnitude can be assumed to be linear or a more complicated model can be used. The change of the magnitude of the membrane effect can be different for each harmonic in the uniformity summary data. As discussed above, this can be representative of potential changes in a membrane joint used in the curing membrane during tire manufacture.

FIG. 7 depicts a graphical representation of the estimated curing membrane joint shape change for an example set of tires. FIG. 7 plots location on the curing membrane along the abscissa and height of the membrane joint along the ordinate. As shown, the curing membrane joint is estimated to change shape with each cure using the curing membrane.

Example Modification of Tire Manufacture

The identification of a transient effect from uniformity measurements can achieve multiple benefits. For instance, the identification of membrane effects can have a direct impact on membrane performance, membrane design, and uniformity yields. According to aspects of the present disclosure, the manufacture of a tire can be modified based at least in part on the identified transient effect to improve tire uniformity. As used herein, modifying the manufacture of a tire can refer to modifying a component or design of the tire itself or modifying a process element (e.g. a curing membrane) used to manufacture the tire.

In one example embodiment, an identified transient membrane effect can be used to estimate the evolution of a joint shape of a membrane joint in the curing membrane. For instance, uniformity measurements associated with a first set of tires (e.g. forty tires) cured using a particular membrane can be analyzed according to aspects of the present disclosure to estimate the membrane effect size and evolution in time. Using the estimated trend, one can predict performance in time and establish a criterion for curing membrane change out or maintenance before its performance becomes unacceptable.

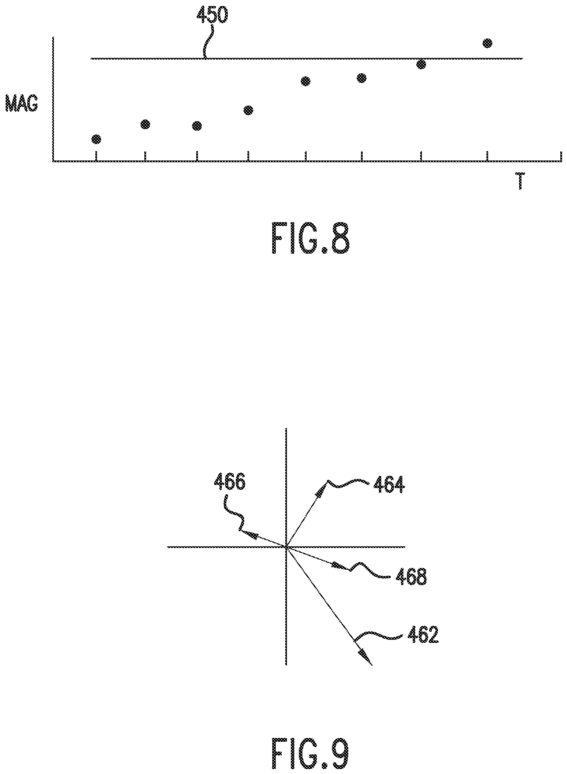

For instance, FIG. 8 provides a graphical representation of an expected change of a membrane effect from tire to tire. FIG. 8 plots number of cures along the abscissa and magnitude of the membrane effect along the ordinate. As shown by the expected change, the magnitude of the membrane effect in this example is expected to increase as more and more tires are cured using the curing membrane. When the magnitude of the membrane effect exceeds a threshold, such as threshold 450, maintenance can be performed on the curing membrane or the curing membrane can be replaced. Since the change of a membrane under failure can be expensive this predictive maintenance approach can provide economic benefits.

According to another example, a membrane effect can be estimated using the uniformity measurements for a set of consecutively cured tires can be used to estimate joint shape. For instance, joint shape representations as shown in FIGS. 6 and 7 can be generated based at least in part on the membrane effect identified for each tire. The determined joint shapes can be used as part of a quality audit to provide feedback on membrane performance. Extensive examination of patterns and other trends in the membrane effect can also be used to provide new designs of membrane shape and for the machinery and processes used to construct the curing membranes. Studies can also be performed with different compounds and treatments to determine improvement actions. Normally such studies would be indirect since it would be normally difficult or impossible to measure the membrane changes under use in a continuous fashion so this can drastically decrease the cost and improve the applicability of the results.

According to yet another example, an identified membrane effect can be considered as one of many potential sources of non-uniformity in a tire to be used in a tire optimization process. For example, it can be determined that the membrane effect on the first harmonic of radial force variation can be modeled as a vector that changes magnitude by a determined amount with each cure and shifts azimuth with each cure. This vector can be used to oppose some other effects (e.g. bandage variation) by purposely changing the loading angle of a green tire into the press for each cure. This can enhance the normal tire optimization process by allowing the membrane effect to change consecutively with each consecutive cure. Since the observed sizes of membrane effects can be on the order of 0.8 kgs force this can provide a substantial improvement in tire uniformity and an increase in yield perhaps on the order of 15%.

For instance, FIG. 9 depicts a vector representation of an example tire optimization process for a uniformity parameter. Vector 462 can be representative of the first harmonic of radial force variation measured for a green tire. Vector 464 can be representative of a press effect on the first harmonic of radial force variation. Vector 466 can be representative of transient membrane effect on the first harmonic of radial force variation. Vector 466 can be expected to change magnitude and azimuth with each cure of the tire. The green tire can be loaded into the press such that the press effect vector 464 and membrane effect vector 466 oppose the vector 462. The resultant vector 468 can be representative of the resulting first harmonic of radial force variation for the cured tire. As shown, the magnitude of the first harmonic of radial force variation is reduced.

Example System for Improving the Uniformity of a Tire

Referring now to FIG. 10, a schematic overview of example system components for implementing the above-described methods is illustrated. An example tire 600 is constructed in accordance with a plurality of respective manufacturing processes. Such tire building processes may, for example, include applying various layers of rubber compound and/or other suitable materials to form the tire carcass, providing a tire belt portion and a tread portion to form the tire summit block, positioning a green tire in a curing press, and curing the finished green tire, etc. Such respective process elements are represented as 602a, 602b,..., 602n in FIG.11 and combine to form exemplary tire 600. It should be appreciated that a batch of multiple tires can be constructed from one iteration of the various processes 602a through 602n.

Referring still to FIG. 10, a measurement machine 604 is provided to obtain the uniformity measurements of the tire 600. The uniformity measurement machine 604 can be configured to measure radial run out and other uniformity parameters (e.g. radial force variation, lateral force variation, tangential force variation) of the tire 600. In general, such a uniformity measurement machine 604 can include sensors (e.g. laser sensors) to operate by contact, non-contact or near contact positioning relative to tire 600 in order to determine the relative position of the tire surface at multiple data points (e.g., 128 points) as it rotates about a center line. The uniformity measurement machine 604 can also include a wheel used to load the tire to obtain force measurements as the tire 600 is rotated.

The measurements obtained by measurement machine 604 can be relayed such that they are received at one or more computing devices 606, which may respectively contain one or more processors 608, although only one computer and processor are shown in FIG. 10 for ease and clarity of illustration. Processor(s) 608 may be configured to receive input data from input device 614 or data that is stored in memory 612. Processor(s) 608, can then analyze such measurements in accordance with the disclosed methods, and provide useable output such as data to a user via output device 616 or signals to a process controller 618. Uniformity analysis may alternatively be implemented by one or more servers 610 or across multiple computing and processing devices.

Various memory/media elements 612a, 612b, 612c (collectively, "612") may be provided as a single or multiple portions of one or more varieties of non-transitory computer-readable media, including, but not limited to, RAM, ROM, hard drives, flash drives, optical media, magnetic media or other memory devices. The computing/processing devices of FIG. 10 may be adapted to function as a special-purpose machine providing desired functionality by accessing software instructions rendered in a computer-readable form stored in one or more of the memory/media elements. When software is used, any suitable programming, scripting, or other type of language or combinations of languages may be used to implement the teachings contained herein.

In one implementation, the processor(s) 608 can execute computer-readable instructions that are stored in the memory elements 612a, 612b, and 612c to cause the processor to perform operations. The operations can include obtaining uniformity measurements of a uniformity parameter for each tire in a set of a plurality of tires and analyzing the uniformity measurements to identify a transient uniformity effect, such as a membrane effect.

Example Application Results

A set of 50 uniformity waveforms for a set of 50 consecutively manufactured tires were obtained. The uniformity waveforms each included 256 data points. In addition to the waveform data, other variables such as confection operators, finishing operators, curing press, and curing load angle, and the order of cure within a press were available for each tire in the set. From this data, there were approximately 7 tires that are consecutively cured in each of 7 different presses.

The uniformity waveforms were cleaned of uniformity effects caused by confection and finishing operators using a tooling signature analysis. The residual waveforms from the tooling signature analysis were decomposed using a Fourier analysis into the first 10 respective harmonic components. The magnitude of each of the first 10 harmonics was modeled as a sum of a press effect term and a transient membrane effect term. The rate of change in magnitude attributable to the transient membrane effect was determined for each harmonic. The results are provided in Table 1 below:

Table 1

| harmonic | Trend estimate |
| --- | --- |
| 1 | 0.53131 |
| 2 | 0.28859 |
| 3 | 0.14185 |
| 4 | 0.14327 |
| 5 | 0.12345 |
| 6 | 0.10149 |
| 7 | 0.07786 |
| 8 | 0.05184 |
| 9 | 0.04219 |
| 10 | 0.04271 |

The trend estimate provides the estimated change in the membrane effect through repeated cures. The rate of change of the membrane effect is not equal through all harmonics. This implies that the membrane joint shape is changing as well as its overall thickness. FIG. 6 depicts an example plot of the changing joint shape determined based on the data provided in Table 1.

While the present subject matter has been described in detail with respect to specific exemplary embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art using the teachings disclosed herein.

**Claims**

**1.** A method for improving the uniformity of a tire (600), the method comprising:

obtaining uniformity measurements of a uniformity parameter for each tire (600) in a set of a plurality of tires;
analyzing, with one or more processing devices (608), the uniformity measurements to identify a transient uniformity effect, the transient uniformity effect changing over time from tire to tire in the set of tires; and
modifying the manufacture of one or more tires based at least in part on the transient uniformity effect.

**2.** The method of claim 1, wherein analyzing, with one or more processing devices, the uniformity measurements to identify a transient uniformity effect comprises:

removing, with the one or more processing devices, one or more uniformity effects from the uniformity measurements to determine a residual uniformity measurement; and

analyzing, with the one or more processing devices, the residual uniformity measurement to identify an effect that varies from tire to tire in the set of tires.

**3.** The method of claim 1, wherein the transient uniformity effect is attributable to a tire harmonic uniformity effect.

**4.** The method of claim 1, wherein the transient uniformity effect comprises a membrane effect attributable to a curing membrane.

**5.** The method of claim 4, wherein the set of tires are consecutively cured using the same curing membrane.

**6.** The method of claim 4, wherein the method comprises estimating a membrane joint shape for the curing membrane.

**7.** The method of claim 4, wherein the uniformity measurements comprise a uniformity waveform for each tire in the set of tires, the uniformity waveform comprising a measured uniformity parameter for a plurality of data points about the tire.

**8.** The method of claim 7, wherein analyzing, with one or more processing devices, the uniformity measurements to identify a transient uniformity effect comprises:

removing one or more uniformity effects from the uniformity waveform to identify one or more residual waveforms;

modeling the one or more residual waveforms as a sum of a press effect term and a membrane effect term;

estimating coefficients associated with the membrane effect term; and determining one or more parameters of the membrane effect for the curing membrane based at least in part on the estimated coefficients.

**9.** The method of claim 4, wherein the uniformity measurements comprise a a magnitude for each of a plurality of harmonic components of the uniformity parameter measured for each tire in the set of tires.

**10.** The method of claim 9, wherein analyzing, with one or more processing devices, the uniformity measurements to identify a transient uniformity effect comprises:

removing one or more uniformity effects from each harmonic component in the plurality of harmonic components to identify a plurality of residual harmonics associated with the set of tires;

modeling each of the residual harmonics as a sum of a press magnitude effect term and a membrane effect term, the membrane effect term changing with each tire in the set of tires;

estimating coefficients associated with the membrane effect term; and determining one or more parameters of the membrane effect based at least in part on the estimated coefficients.

**11.** The method of claim 1, wherein modifying the manufacture of one or more tires comprises modifying a process element contributing to the transient uniformity effect.

**12.** The method of claim 4, wherein modifying the manufacture of one or more tires comprises changing out a curing membrane of a curing press based at least in part on the one or more parameters of the membrane effect.

**13.** The method of claim 4, wherein modifying the manufacture of one or more tires comprises designing a membrane joint for a curing membrane based at least in part on the membrane effect.

**14.** The method of claim 4, wherein modifying tire manufacture comprises changing a loading angle of a green tire in a curing press based at least in part on the membrane effect.

**15.** A system for improving the uniformity of a tire (600), the system comprising: measurement machine (604) configured to obtain uniformity measurements for each tire (600) in a set of a plurality of tires; and a computing device (606) coupled to the measurement machine (604), the computing device (606) comprising one or more processors (608) and at least one non-transitory computer-readable medium (612), the at least one non-transitory computer-readable medium (612) storing computer- readable instructions that when executed by the one or more processors (608) causes the one or more processors (608) perform operations, **characterized in that** the operations comprise analyzing the uniformity measurements to identify a transient uniformity effect, the transient uniformity effect changing over time from tire to tire in the set of tires.

**Patentansprüche**

1. Verfahren zur Verbesserung der Gleichförmigkeit eines Reifens (600), wobei das Verfahren die folgenden Schritte umfasst:

   Durchführen von Gleichförmigkeitsmessungen eines Gleichförmigkeitsparameters für jeden Reifen (600) in einem Satz von mehreren Reifen;
   Analysieren der Gleichförmigkeitsmessungen mit einer oder mehreren Verarbeitungsvorrichtungen (608), um einen transienten Gleichförmigkeitseffekt zu ermitteln, wobei sich der transiente Gleichförmigkeitseffekt von Reifen zu Reifen in dem Satz Reifen mit der Zeit ändert; und
   Modifizieren der Herstellung eines oder mehrerer Reifen wenigstens teilweise basierend auf dem transienten Gleichförmigkeitseffekt.

2. Verfahren nach Anspruch 1, wobei das Analysieren der Gleichförmigkeitsmessungen mit einer oder mehreren Verarbeitungsvorrichtungen zur Ermittlung eines transienten Gleichförmigkeitseffekts folgende Schritte umfasst:

   Entfernen, mit der einen bzw. den mehreren Verarbeitungsvorrichtungen, eines oder mehrerer Gleichförmigkeitseffekte aus den Gleichförmigkeitsmessungen, um einen Restwert der Gleichförmigkeitsmessung zu ermitteln; und
   Analysieren, mit der einen bzw. den mehreren Verarbeitungsvorrichtungen, des Restwerts der Gleichförmigkeitsmessung, um einen Effekt zu ermitteln, der von Reifen zu Reifen in dem Satz Reifen schwankt.

3. Verfahren nach Anspruch 1, wobei der transiente Gleichförmigkeitseffekt auf einen Gleichförmigkeitseffekt in Form einer Reifenoberschwingung zurückzuführen ist.

4. Verfahren nach Anspruch 1, wobei der transiente Gleichförmigkeitseffekt einen Membraneffekt umfasst, der auf eine Härtungsmembran zurückzuführen ist.

5. Verfahren nach Anspruch 4, wobei der Satz Reifen nacheinander unter Verwendung derselben Härtungsmembran gehärtet wird.

6. Verfahren nach Anspruch 4, wobei bei dem Verfahren die Form einer Membranfuge für die Härtungsmembran geschätzt wird.

7. Verfahren nach Anspruch 4, wobei die Gleichförmigkeitsmessungen eine Gleichförmigkeitswellenform für jeden Reifen in dem Satz Reifen umfassen, wobei die Gleichförmigkeitswellenform einen gemessenen Gleichförmigkeitsparameter für eine Vielzahl von Datenpunkten um den Reifen herum umfasst.

8. Verfahren nach Anspruch 7, wobei das Analysieren der Gleichförmigkeitsmessungen mit einer oder mehreren Verarbeitungsvorrichtungen zur Ermittlung eines transienten Gleichförmigkeitseffekts folgende Schritte umfasst:

   Entfernen eines oder mehrerer Gleichförmigkeitseffekte aus der Gleichförmigkeitswellenform, um eine oder mehrere restlichen Wellenformen zu ermitteln; Modellieren der einen bzw. mehreren restlichen Wellenformen als Summe aus einem Presswirkungsterm und einem Membranwirkungsterm;
   Schätzen von Koeffizienten, die zu dem Membranwirkungsterm gehören; und
   Ermitteln eines oder mehrerer Parameter der Membranwirkung für die Härtungsmembran, die wenigstens teilweise auf den geschätzten Koeffizienten basieren.

9. Verfahren nach Anspruch 4, wobei die Gleichförmigkeitsmessungen eine Größe für jede einer Vielzahl von harmonischen Komponenten des für jeden Reifen in dem Satz Reifen gemessenen Gleichförmigkeitsparameters umfassen.

10. Verfahren nach Anspruch 9, wobei das Analysieren der Gleichförmigkeitsmessungen mit einer oder mehreren Verarbeitungsvorrichtungen zur Ermittlung eines transienten Gleichförmigkeitseffekts folgende Schritte umfasst:

Entfernen eines oder mehrerer Gleichförmigkeitseffekte aus jeder harmonischen Komponente in der Vielzahl von harmonischen Komponenten, um eine Vielzahl von restlichen Oberschwingungen zu ermitteln, die zu dem Satz Reifen gehören;

Modellieren einer jeden der restlichen Oberschwingungen als Summe eines Pressgrößenwirkungsterms und eines Membranwirkungsterms, wobei sich der Membranwirkungsterm mit jedem Reifen in dem Satz Reifen ändert;

Schätzen von Koeffizienten, die zu dem Membranwirkungsterm gehören; und

Ermitteln eines oder mehrerer Parameter der Membranwirkung, die wenigstens teilweise auf den geschätzten Koeffizienten basieren.

11. Verfahren nach Anspruch 1, wobei das Modifizieren der Herstellung eines oder mehrerer Reifen das Modifizieren eines Prozesselements umfasst, das zu dem transienten Gleichförmigkeitseffekt beiträgt.

12. Verfahren nach Anspruch 4, wobei das Modifizieren der Herstellung eines oder mehrerer Reifen das Auswechseln einer Härtungsmembran einer Härtungspresse wenigstens teilweise basierend auf dem einen bzw. den mehreren Parametern der Membranwirkung umfasst.

13. Verfahren nach Anspruch 4, wobei das Modifizieren der Herstellung eines oder mehrerer Reifen die Gestaltung einer Membranfuge für eine Härtungsmembran wenigstens teilweise basierend auf der Membranwirkung umfasst.

14. Verfahren nach Anspruch 4, wobei das Modifizieren der Herstellung des Reifens das Ändern eines Belastungswinkels eines Reifenrohlings in einer Härtungspresse wenigstens teilweise basierend auf der Membranwirkung umfasst.

15. System zur Verbesserung der Gleichförmigkeit eines Reifens (600), wobei das System Folgendes umfasst:

eine Messmaschine (604), die dazu ausgebildet ist, Gleichförmigkeitsmessungen für jeden Reifen (600) in einem Satz von mehreren Reifen durchzuführen; und

eine Rechenvorrichtung (606), die mit der Messmaschine (604) gekoppelt ist, wobei die Rechenvorrichtung (606) einen oder mehrere Prozessoren (608) umfasst und wenigstens ein nicht-transitorisches computerlesbares Medium (612), wobei auf dem wenigstens einen nicht-transitorischen computerlesbaren Medium (612) computerlesbare Befehle gespeichert sind, die dann, wenn sie von dem einen bzw. den mehreren Prozessoren (608) ausgeführt werden, den einen bzw. die mehreren Prozessoren (608) dazu veranlassen, Operationen durchzuführen, **dadurch gekennzeichnet, dass** die Operationen das Analysieren der Gleichförmigkeitsmessungen zur Ermittlung eines transienten Gleichförmigkeitseffekts umfassen, wobei sich der transiente Gleichförmigkeitseffekt von Reifen zu Reifen in dem Satz Reifen mit der Zeit ändert.

**Revendications**

1. Procédé d'amélioration de l'uniformité d'un pneu (600), le procédé comprenant les opérations, consistant à :

obtenir des mesures d'uniformité d'un paramètre d'uniformité pour chaque pneu (600) dans un ensemble d'une pluralité de pneus ;

analyser, avec un ou plusieurs dispositifs de traitement (608), les mesures d'uniformité, pour identifier un effet d'uniformité transitoire, l'effet d'uniformité transitoire changeant avec le temps d'un pneu à l'autre dans l'ensemble de pneus et

modifier la fabrication d'un ou plusieurs pneus en fonction au moins en partie de l'effet d'uniformité transitoire.

2. Procédé selon la revendication 1, dans lequel l'opération, consistant à analyser, avec un ou plusieurs dispositifs de traitement, les mesures d'uniformité, pour identifier un effet d'uniformité transitoire, comprend les opérations, consistant à :

supprimer, avec les un ou plusieurs dispositifs de traitement, un ou plusieurs effets d'uniformité des mesures d'uniformité, pour déterminer une mesure d'uniformité résiduelle et

analyser, avec les un ou plusieurs dispositifs de traitement, la mesure d'uniformité résiduelle, pour identifier un effet qui varie d'un pneu à l'autre dans l'ensemble de pneus.

**3.** Procédé selon la revendication 1, dans lequel l'effet d'uniformité transitoire peut être attribué à un effet d'uniformité du pneu au moyen d'harmoniques.

**4.** Procédé selon la revendication 1, dans lequel l'effet d'uniformité transitoire comprend un effet de membrane, pouvant être attribué à une membrane à durcissement.

**5.** Procédé selon la revendication 4, dans lequel l'ensemble de pneus est vulcanisé consécutivement, en utilisant la membrane à durcissement.

**6.** Procédé selon la revendication 4, dans lequel le procédé comprend l'opération, consistant à estimer une forme de joint à membrane, pour la membrane à durcissement.

**7.** Procédé selon la revendication 4, dans lequel les mesures d'uniformité comprennent une forme d'onde d'uniformité pour chaque pneu dans l'ensemble de pneus, la forme d'onde d'uniformité comprenant un paramètre mesuré d'uniformité pour une pluralité de points de données sur le pneu.

**8.** Procédé selon la revendication 7, dans lequel l'opération, consistant à analyser, avec un ou plusieurs dispositifs de traitement, les mesures d'uniformité, pour identifier un effet d'uniformité transitoire, comprend les opérations, consistant à :

supprimer un ou plusieurs effets d'uniformité de la forme d'onde d'uniformité, pour identifier une ou plusieurs formes d'ondes résiduelle ;
modeler les une ou plusieurs formes d'ondes résiduelles en tant que somme d'un terme d'effet de compression et d'un terme d'effet de membrane;
estimer les coefficients, associés au terme d'effet de membrane et
déterminer un ou plusieurs paramètres de l'effet de membrane pour la membrane à durcissement, en fonction au moins en partie des coefficients estimés.

**9.** Procédé selon la revendication 4, dans lequel les mesures d'uniformité comprennent une amplitude pour chaque composante parmi une pluralité de composantes harmoniques du paramètre d'uniformité, mesuré pour chaque pneu dans l'ensemble de pneus.

**10.** Procédé selon la revendication 9, dans lequel l'opération, consistant à analyser, avec un ou plusieurs dispositifs de traitement, les mesures d'uniformité, pour identifier un effet d'uniformité transitoire, comprend les opérations, consistant à :

supprimer un ou plusieurs effets d'uniformité de chaque composante harmonique dans la pluralité de composantes harmoniques, pour identifier une pluralité d'harmoniques résiduelles, associées à l'ensemble de pneus ;
modeler chacune des harmoniques résiduelles en tant que somme d'un terme d'effet d'ampleur de compression et d'un terme d'effet de membrane, le terme d'effet de membrane changeant avec chaque pneu dans l'ensemble de pneus ;
estimer les coefficients, associés au terme d'effet de membrane et
déterminer un ou plusieurs paramètres de l'effet de membrane en fonction au moins en partie des coefficients estimés.

**11.** Procédé selon la revendication 1, dans lequel l'opération, consistant à modifier la fabrication d'un ou plusieurs pneus comprend l'opération, consistant à modifier un élément du procédé qui contribue à l'effet d'uniformité transitoire.

**12.** Procédé selon la revendication 4, dans lequel l'opération, consistant à modifier la fabrication d'un ou plusieurs pneus, comprend l'opération, consistant à changer une membrane à durcissement d'une presse à vulcaniser en fonction au moins en partie des un ou plusieurs paramètres de l'effet de membrane.

**13.** Procédé selon la revendication 4, dans lequel l'opération, consistant à modifier la fabrication d'un ou plusieurs pneus, comprend l'opération, consistant à concevoir un joint à membrane pour une membrane à durcissement, en fonction au moins en partie de l'effet de membrane.

**14.** Procédé selon la revendication 4, dans lequel l'opération, consistant à modifier la fabrication d'un pneu, comprend l'opération, consistant à changer un angle de chargement d'un pneu cru dans une presse à vulcaniser, en fonction au moins en partie de l'effet de membrane.

15. Système d'amélioration de l'uniformité d'un pneu (600), le système comprenant :

une machine de mesure (604), configurée pour obtenir des mesures d'uniformité pour chaque pneu (600) dans un ensemble d'une pluralité de pneus et
un dispositif informatique (606), couplé à la machine de mesure (604),
le dispositif informatique (606) comprenant un ou plusieurs processeurs (608) et au moins un support lisible par ordinateur non transitoire (612),
le au moins un support lisible par ordinateur non transitoire (612) stockant des instructions lisibles par ordinateur qui, lorsqu'elles sont exécutées par les un ou plusieurs processeurs (608), amènent les un ou plusieurs processeurs (608) à exécuter des opérations,
**caractérisé en ce que**
l'opération comprend l'étape, consistant à
analyser les mesures d'uniformité, pour identifier un effet d'uniformité transitoire, l'effet d'uniformité transitoire changeant avec le temps d'un pneu à un autre dans l'ensemble de pneus.

FIG.1

200

```
┌─────────────────────────────────────┐
│   IDENTIFY SET OF TIRES FOR UNIFORMITY │──202
│             ANALYSIS                 │
└─────────────────────────────────────┘
                  │
                  ▼
┌─────────────────────────────────────┐
│  OBTAIN UNIFORMITY MEASUREMENTS FOR THE │──204
│            SET OF TIRES              │
└─────────────────────────────────────┘
                  │
                  ▼
┌─────────────────────────────────────┐
│   REMOVE ONE OR MORE UNIFORMITY EFFECTS │──206
│   FROM THE UNIFORMITY MEASUREMENTS TO │
│       DETERMINE A RESIDUAL           │
└─────────────────────────────────────┘
                  │
                  ▼
┌─────────────────────────────────────┐
│  SEPARATE TRANSIENT UNIFORMITY EFFECTS FROM │──208
│ NON-TRANSIENT UNIFORMITY EFFECTS IN THE RESIDUAL │
└─────────────────────────────────────┘
                  │
                  ▼
┌─────────────────────────────────────┐
│  MODIFY TIRE MANUFACTURE BASED AT LEAST IN │──210
│   PART ON TRANSIENT UNIFORMITY EFFECT │
└─────────────────────────────────────┘
```

FIG.2

300

```
┌─────────────────────────────────────────────┐
│   OBTAIN  UNIFORMITY  WAVEFORMS  FOR  A       │─── 302
│           SET  OF  TIRES                      │
└─────────────────────────────────────────────┘
                     │
                     ▼
┌─────────────────────────────────────────────┐
│  REMOVE  UNIFORMITY  EFFECTS  FROM  THE  UNIFORMITY │─── 304
│  WAVEFORMS  TO  IDENTIFY  RESIDUAL  WAVEFORM  │
└─────────────────────────────────────────────┘
                     │
                     ▼
┌─────────────────────────────────────────────┐
│  MODEL  RESIDUAL  WAVEFORM  AS  A  SUM  OF  PRESS │─── 306
│  EFFECT  TERM  AND  A  MEMBRANE  EFFECT  TERM │
└─────────────────────────────────────────────┘
                     │
                     ▼
┌─────────────────────────────────────────────┐
│  DETERMINE  ONE  OR  MORE  PARAMETERS  OF  THE │─── 308
│           MEMBRANE  EFFECT                    │
└─────────────────────────────────────────────┘
                     │
                     ▼
┌─────────────────────────────────────────────┐
│  CONSTRUCT  ESTIMATE  OF  MEMBRANE  JOINT  EFFECTS │─── 310
│           AND/OR  JOINT  SHAPES               │
└─────────────────────────────────────────────┘
```

FIG.3

FIG.4

FIG.5

FIG.6

FIG.7

FIG.8

FIG.9

FIG.10

EP 3 065 942 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013039505 A
- US 20130098148 A
- US 20050081614 A
- US 8544319 B
- US B B
- US 5062781 A
- US 5036113 A
- WO 2014051613 A1